# DEMANDE DE BREVET EUROPEEN

(11) **EP 4 212 267 A1**
(43) Date de publication de la demande: **19.07.2023**
(21) Numéro de dépôt: 22305040.2
(22) Date de dépôt: 17.01.2022
(51) Int. Cl.: B22F 10/25, B33Y 10/00, C22C 1/04, B23K 26/342, C22C 19/05, F01D 5/00, B22F 5/00, B22F 5/04, B22F 7/06

(54) **PROCÉDÉ DE RECONSTRUCTION DE PIÈCES EN SUPERALLIAGE INCONEL 713 PAR FABRICATION ADDITIVE MÉTALLIQUE**

(71) Demandeur: REVIMA SOA, 95310 Saint-Ouen-l'Aumône (FR)
(72) Inventeur: MARCOS, Daniel, 95640 Neuilly-En-Vexin (FR); CHIEUX, Marion, 93500 Pantin (FR)
(74) Mandataire: Ipside

(57) **Abrégé**

Procédé de reconstruction d'une pièce métallique (100) en superalliage Inconel 713 par fabrication additive métallique, mettant en œuvre une technologie de dépôt de matière sous énergie concentrée, dite DMD, dans laquelle une poudre (10) du superalliage Inconel 713 est projetée sur une zone (110) à reconstruire, puis fondue par un laser (20) lors de son dépôt pour former une pluralité de cordons (30a, 30b) juxtaposés et superposés, de sorte à reconstruire ladite zone.

## Description

### DOMAINE TECHNIQUE

La présente invention appartient au domaine général de la fabrication additive, notamment la fabrication additive métallique par une technologie dite DMD (*Direct Metal Deposition*), et concerne plus particulièrement un procédé de reconstruction de pièces fabriquées dans un superalliage Inconel (marque déposée), plus précisément Inconel 713, par fabrication additive DMD.

La présente invention trouve une application directe, mais non exclusive, en aéronautique pour la réparation de pièces de moteur telles que les aubes de turbine.

### ÉTAT DE L'ART

La réparation de pièces métalliques est nécessaire dans différents secteurs industriels, en particulier en aéronautique dans les opérations de maintenance, réparation et révision connues par leur sigle anglais MRO (*Maintenance, Repair and Overhaul*)*.*

Il est ici entendu par réparation de pièce métallique, toute réparation structurale consistant à combler un retrait de matière, accidentel ou dû à l'usure, par différentes techniques d'ajout local de matière telles que le soudage et la fabrication additive métallique.

Avant d'exposer les différentes méthodes de réparation connues, il convient au préalable de bien distinguer entre le soudage et la fabrication additive métallique. Bien que ces deux techniques présentent des caractéristiques physiques communes, elles se distinguent par la nature du dépôt de matière effectué. En effet, la fabrication additive métallique peut être considérée comme une superposition et une fusion de cordons de soudures successifs tandis que le soudage ne permet le dépôt, par définition, que d'un seul cordon de soudure sur la ligne de soudage. De plus, la fabrication additive métallique permet de constituer une forme géométrique programmée. L'Homme du métier connait bien les différences entre ces deux procédés et leurs spécificités techniques respectives qui les rendent plus ou moins adaptés à des applications données.

La réparation de pièces métalliques en Inconel 713 par soudage est connue. Toutefois, les méthodes traditionnelles de soudage donnent des résultats insatisfaisants pour ce matériau. Par exemple, certaines techniques de soudage connues chauffent la pièce à des températures élevées, suffisantes pour souder le superalliage, mais occasionnent cependant, à de telles températures, des fissures et/ou des fractures dues à la chaleur. Cela fragilise donc la pièce « réparée » et la rend souvent inutilisable pour l'application visée.

Il existe donc un besoin de trouver une méthode de réparation adaptée à l'Inconel 713, qui ne soumette pas la matrice de la pièce à des dommages induits par la chaleur.

Le document WO2005032755 décrit un procédé de réparation par soudage d'une surface d'usure d'encoche en Z usée sur une aube de turbine comportant un substrat en Inconel 713, qui limiterait les dommages causés par les soudures. Pour souder de l'Inconel 713 sur la surface d'usure, un faisceau laser Nd : YAG est dirigé vers la surface d'usure et traverse celle-ci selon un modèle de points pour y créer une couche de placage par fusion d'une poudre d'Inconel 713.

Ce document divulgue donc une solution utilisant exclusivement du soudage laser et ne démontre pas l'absence des dommages dus à la chaleur. En effet, lorsque la profondeur de l'usure est importante, une couche de placage épaisse doit être déposée et nécessite des cordons de soudure de même épaisseur dont la formation produit une élévation locale de la température, suffisante pour causer des fissures dans la pièce, malgré la concentration locale d'énergie permise par le laser. D'ailleurs, le document WO2006137889, du même inventeur, décrit un procédé de réparation dans lequel un matériau d'apport tel que l'Inconel 713 est déposé par des techniques de soudage laser par fusion de poudre. Les trajectoires de soudure sont choisies de manière à éviter les zones de concentration des contraintes. Pendant le soudage, un seul cordon de soudure est préférable. Toutefois, si le cordon n'est pas de dimension suffisante pour couvrir l'ensemble de la surface usinée, un motif de points peut être utilisé pour obtenir une accumulation de soudure souhaitée ainsi que la couverture de la zone.

Cette solution présente les mêmes inconvénients que la solution précédente. De plus, ces solutions ne sont pas adaptées à une reconstruction en volume. En effet, les cordons de soudure formés ne peuvent pas être superposés à l'image d'une fabrication additive.

Les procédés de fabrication additive dits DED (*Direct Energy Deposition*), et plus particulièrement les procédés DMD, comprennent des étapes spécifiques dont les paramètres doivent être réglés différemment des techniques de soudage pour permettre notamment des reconstructions dans différentes formes avec les performances mécaniques et thermiques souhaitées.

Le document EP3756794 décrit un procédé de fabrication d'une pièce, comprenant la formation de la pièce par fabrication additive avec la superposition, la fusion et la solidification d'un alliage métallique, notamment l'Inconel 713, sur la base d'un modèle numérique tridimensionnel ; et le traitement thermique de la pièce formée. Cette solution ne concerne donc pas un procédé de reconstruction ou de réparation de pièce, mais seulement une fabrication intégrale. De ce fait, elle n'apporte aucune solution au problème de dépôt de l'Inconel 713 sur un substrat fabriqué dans ce même superalliage par une technique de fabrication additive.

### PRÉSENTATION DE L'INVENTION

La présente invention vise à pallier les inconvénients de l'art antérieur exposés ciavant et propose une solution particulièrement innovante pour reconstruire en Inconel 713 une zone d'usure sur une pièce en Inconel 713 par une technique de fabrication additive qui respecte l'intégrité structurale de la pièce résultante et évite la formation de fissures et autres dommages dus à la chaleur.

À cet effet, la présente invention a pour objet un procédé de reconstruction d'une zone sur une pièce métallique en superalliage Inconel 713 par fabrication additive métallique, dans le but de réparer ladite pièce, remarquable en ce qu'il met en œuvre une technologie de dépôt de matière sous énergie concentrée, dite DMD (*Direct Metal Deposition*), dans laquelle une poudre du superalliage Inconel 713 est projetée sur la zone à reconstruire, puis fondue par un laser lors de son dépôt pour former une pluralité de cordons juxtaposés et superposés, de sorte à reconstruire en volume ladite zone.

Selon un mode de réalisation de l'invention, la reconstruction peut être un rechargement de surface.

Selon un mode de réalisation de l'invention, le laser utilisé est un laser à grenat d'yttrium et d'aluminium dopé au néodyme, noté Nd : YAG, présentant une longueur d'onde de 1,04µm et une puissance maximale de 500W.

Préférablement, la puissance maximale du laser est comprise entre 100 et 500W. Selon un mode de réalisation de l'invention, la poudre présente une granulométrie comprise entre 45 et 106µm (soit environ entre 140 et 325 Mesh).

Selon un mode de réalisation avantageux de l'invention, la poudre est projetée avec un débit massique compris entre 0,5 et 20g/min.

De façon avantageuse, la poudre et le laser sont appliqués sur la pièce au moyen d'une buse se déplaçant le long de la zone à une vitesse de déplacement latéral supérieure ou égale à 600mm/min, de préférence comprise entre 600 et 1000mm/min.

Les plages de paramètres données ci-dessus permettent d'améliorer considérablement la précision et/ou la vitesse de dépôt de matière, de sorte à augmenter la qualité et/ou la rapidité de la reconstruction.

Avantageusement, la présente invention s'adresse à des pièces présentant une structure polycristalline.

La présente invention a pour autre objet un procédé de réparation d'une pièce métallique en superalliage Inconel 713 comprenant :
- une étape de contrôle de la pièce ;
- une étape de préparation de la pièce ;
- une étape de traitement de la pièce ; et
- une étape de finition.

Ce procédé comprend en outre, comme étape intermédiaire, un procédé de reconstruction tel que présenté.

La présente invention a également pour objet une utilisation du superalliage Inconel 713 en fabrication additive métallique selon la technologie DMD sur un substrat en superalliage Inconel 713.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un procédé de reconstruction de pièces en superalliage Inconel 713 par fabrication additive métallique, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : une vue en section longitudinal d'une buse de projection opérant une reconstruction de pièce par dépôt de cordons successifs selon l'invention ;
- Figure 2 : un exemple d'agencement tridimensionnel de cordons déposés ;
- Figure 3 : un organigramme des principales étapes d'un procédé de réparation de pièce selon l'invention.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente description.

Dans le mode de réalisation décrit ci-après, on fait référence à un procédé de reconstruction d'une pièce en Inconel 713 par fabrication additive DMD avec une poudre d'Inconel 713 comme matériau d'apport, dans le but de réparer ladite pièce. Cet exemple, non limitatif, est donné pour une meilleure compréhension de l'invention et n'exclut pas l'utilisation du procédé pour l'ajout de fonctions sur une pièce intègre en déposant localement de la matière à des endroits critiques de celle-ci.

Dans la présente description, le terme « pièce » désigne un matériau formant un élément fonctionnel pouvant constituer la totalité ou un composant d'un produit donné ; l'expression « fabrication additive » désigne un procédé assisté par ordinateur consistant à assembler des matériaux par empilement de couches successives pour fabriquer, totalement ou partiellement, une pièce à partir d'un modèle numérique ; la technologie DMD désigne quant à elle une sous-classe de procédés de fabrication additive métallique dans laquelle une poudre métallique est projetée puis fondue par un laser. Compte tenu de ce qui précède, la fabrication additive en général, et la technologie DMD en particulier, ne doivent en aucun cas être confondues avec des techniques pouvant être considérées comme « additives » telles que le soudage. En effet, l'expression « fabrication additive », bien que revêtant un sens littéral large, possède la définition précise rappelée ci-dessus qui permet d'éviter toute confusion, surtout de la part de l'homme du métier. D'un autre côté, l'Inconel 713, parfois noté Inconel 713C, est un superalliage à base de nickel de la famille Inconel, décrit pour la première fois dans le brevet américain US2570193. Sa composition (en fraction massique) est rappelée dans le tableau suivant :

| Composition de l'Inconel 713 (en fraction massique) | | |
|---|---|---|
| Élément | Nominal | Plage (Selon AMS 5391) |
| Cr | 12.50 | 12.00 - 14.00 |
| Mo | 4.20 | 3.80 - 5.20 |
| Nb | 2.20 | 1.80 - 2.80 |
| Al | 6.10 | 5.50 - 6.50 |
| Ti | 0.80 | 0.50 - 1.00 |
| C | 0.12 | 0.08 - 0.20 |
| Bo | 0.012 | 0.005 - 0.015 |
| Zi | 0.10 | 0.05 - 0.15 |
| Si | - | 0.50 max |
| Mn | - | 0.25 max |
| Fe | - | 2.50 max |
| Cu | - | 0.50 max |
| Ni | Balance | Balance |

Il convient de rappeler que AMS 5391 est la norme en vigueur portant sur l'Inconel 713.

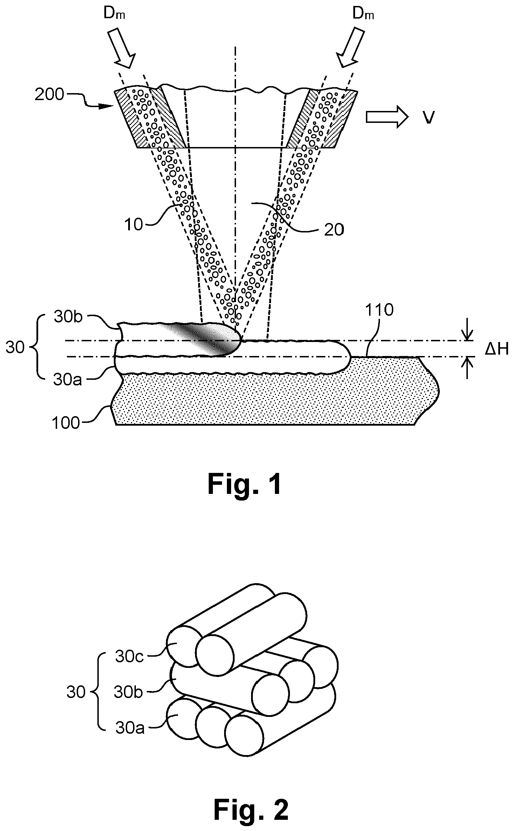

La figure 1 représente une pièce 100 en Inconel 713, endommagée au niveau d'une zone d'usure 110, en cours de reconstruction par la mise en œuvre d'un procédé de reconstruction par fabrication additive DMD selon un mode de réalisation de l'invention, dans lequel une buse de projection 200 se déplace par rapport à la pièce 100 en projetant une poudre 10 d'Inconel 713 au travers d'un faisceau laser 20, de façon coaxiale, sur la zone 110 de sorte à former successivement une pluralité de cordons 30a et 30b par fusion puis solidification de ladite poudre.

La pièce 100 est par exemple une pièce de moteur aéronautique telle qu'une aube de turbine de turboréacteur, et la zone d'usure 110 peut être située sur un bord de la pièce, en l'occurrence sur un bord d'attaque d'aube de turbine en raison de la vulnérabilité de cette partie par rapport au reste de la pièce. La zone d'usure 110 peut présenter une forme et des dimensions quelconques en fonction de l'accident ou de l'usure subis par la pièce.

La buse 200 est une buse de projection connue dans l'art, utilisée dans des procédés DMD et analogues, et permettant de projeter, suivant un cône, la poudre 10 via une ouverture annulaire autour de la sortie du faisceau laser 20, ladite ouverture présentant des parois internes inclinés par rapport à l'axe (de révolution) de la buse. Plus précisément, la poudre 10 projetée forme un cône dont le sommet est sensiblement confondu avec le point focal du faisceau laser 20, de sorte à créer une zone de fusion du métal localisée au niveau de la zone de concentration d'énergie et dans laquelle se produit le dépôt de matière.

Bien entendu, la buse 200 est reliée à un système robotisé, non représenté, comprenant tous les moyens et servitudes nécessaires pour déplacer la buse, générer et focaliser le faisceau laser, produire un jet de poudre à partir d'un réservoir prévu à cet effet, et contrôler différents paramètres de fonctionnement. De tels robots sont bien connus dans l'art.

Ainsi, la buse 200 permet de projeter la poudre 10 avec un débit massique Dₘ tout en se déplaçant le long de la zone 110 à reconstruire avec une vitesse de déplacement latéral V tel que schématisé sur la figure 1. La vitesse V correspond par exemple à la composante horizontale du vecteur vitesse lorsque la buse est positionnée verticalement.

Préférablement, le débit massique Dₘ est compris entre 0,5 et 20g/min, et la vitesse V est supérieure à 600mm/min.

Plus préférablement, la vitesse de déplacement latéral V est comprise entre 600 et 1000mm/min.

La poudre 10 d'Inconel 713, selon un exemple de réalisation, présente une granulométrie comprise entre 45 et 106µm.

Le laser 20 est par exemple un laser à grenat d'yttrium et d'aluminium dopé au néodyme (Nd : YAG), présentant une longueur d'onde de 1,04µm et une puissance maximale de 500W, de préférence comprise entre 100 et 500W.

Chaque cordon 30a et 30b est formé avec une épaisseur prédéterminée en fonction des paramètres de fonctionnement, notamment le débit massique Dₘ de poudre et la vitesse de déplacement latéral V de la buse.

Les cordons 30a et 30b peuvent ainsi être juxtaposés et superposés suivant un agencement 30 tridimensionnel précis, en présenter chacun une longueur bien définie, afin de reconstruire différents volumes possibles.

La figure 2 représente un exemple d'agencement 30 possible qui consiste à superposer des couches de cordons 30a, 30b et 30c en alternant leur orientation, les cordons de chaque couche étant sensiblement perpendiculaires aux cordons d'une couche successive.

Bien entendu, d'autres agencements sont prévus et peuvent être facilement imaginés par l'homme du métier en fonction de la reconstruction à effectuer. Ainsi, le procédé de reconstruction par fabrication additive DMD en Inconel 713 est adapté à différentes zones d'usures et permet donc de réparer des pièces en Inconel 713 plus ou moins complexes.

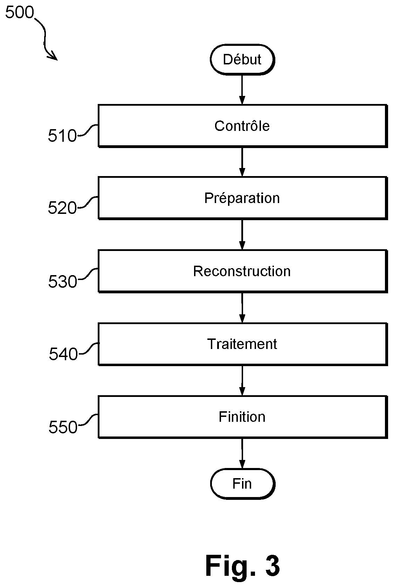

La figure 3 représente les principales étapes d'un procédé 500 de réparation d'une pièce en Inconel 713 ayant subie un dommage au niveau d'une zone d'usure, ledit procédé comprenant :
- une étape 510 préalable de contrôle consistant notamment à effectuer des mesures géométriques sur la pièce et à caractériser et localiser le dommage ;
- une étape 520 de préparation de la pièce consistant notamment à retirer les parties endommagées de la pièce ;
- une étape 530 de reconstruction de la zone d'usure selon le procédé de reconstruction décrit en amont ;
- une étape 540 de traitement, notamment de traitement thermique de la pièce reconstruite pour sa détente et pour obtenir les propriétés mécaniques demandées ; et
- une étape 550 de finition de la pièce consistant notamment à rectifier la forme finale de la pièce par usinage, sablage, etc.

Il ressort clairement de la présente description que le procédé de reconstruction et le procédé de réparation peuvent admettre des étapes ou des éléments supplémentaires sans pour autant sortir du cadre de l'invention.

## Revendications

1. Procédé de reconstruction d'une zone (110) sur une pièce métallique (100) en superalliage Inconel 713 par fabrication additive métallique, pour réparer ladite pièce, **caractérisé en ce qu'**il met en œuvre une technologie de dépôt de matière sous énergie concentrée, dite DMD, dans laquelle une poudre (10) du superalliage Inconel 713 est projetée sur la zone à reconstruire, puis fondue par un laser (20) lors de son dépôt pour former une pluralité de cordons (30a, 30b, 30c) juxtaposés et superposés, de sorte à reconstruire en volume ladite zone.

2. Procédé selon la revendication 1, dans lequel le laser est un laser Nd : YAG présentant une longueur d'onde de 1,04µm et une puissance maximale de 500W.

3. Procédé selon la revendication 2, dans lequel la puissance maximale du laser est comprise entre 100 et 500W.

4. Procédé selon l'une quelconque des revendications précédentes, dans lequel la poudre (10) présente une granulométrie comprise entre 45 et 106µm.

5. Procédé selon l'une quelconque des revendications précédentes, dans lequel la poudre (10) est projetée avec un débit massique (Dₘ) compris entre 0,5 et 20g/min.

6. Procédé selon l'une quelconque des revendications précédentes, dans lequel la poudre (10) et le laser (20) sont appliqués sur la pièce (100) au moyen d'une buse de projection (200) qui se déplace le long de la zone à reconstruire (110) à une vitesse de déplacement latéral (V) supérieure ou égale à 600mm/min.

7. Procédé selon la revendication 6, dans lequel la vitesse de déplacement latéral de la buse est comprise entre 600 et 1000mm/min.

8. Procédé selon l'une quelconque des revendications précédentes, dans lequel la pièce métallique (100) à réparer présente une structure polycristalline.

9. Procédé (500) de réparation d'une pièce métallique (100) en superalliage Inconel 713 comprenant :
- une étape (510) de contrôle de la pièce ;
- une étape (520) de préparation de la pièce ;
- une étape (540) de traitement de la pièce ; et
- une étape (550) de finition ;
ledit procédé étant **caractérisé en ce qu'**il comprend en outre, comme étape intermédiaire (530) entre les étapes de préparation et de traitement, un procédé de reconstruction selon l'une des revendications précédentes.

10. Utilisation du superalliage Inconel 713 en fabrication additive métallique selon la technologie DMD sur un substrat en superalliage Inconel 713.
